# FASCICULE DE BREVET EUROPEEN

(11) **EP 3 264 026 B1**
(45) Date de publication et mention de la délivrance du brevet: **01.04.2020**
(21) Numéro de dépôt: 16177432.8
(22) Date de dépôt: 01.07.2016
(51) Int. Cl.: G01B 5/00, G01B 3/14

(54) **DISPOSITIF POUR CONTRÔLER UN CORDON DE SOUDURE ET UTILISATION DU DISPOSITIF**
VORRICHTUNG ZUM KONTROLLIEREN EINER SCHWEISSNAHT UND VERWENDUNG DER VORRICHTUNG
DEVICE FOR INSPECTING A WELD SEAM AND USE OF THE DEVICE

(43) Date de publication de la demande: 03.01.2018
(73) Titulaire: European Welding Group SPRL, 6001 Charleroi (BE)
(72) Inventeur: VALENTE, Raffaele, 6001 CHARLEROI (BE)
(74) Mandataire: ABYOO

(56) Documents cités:
- CN-U- 202 869 418
- DE-B- 1 156 241
- GB-A- 439 319
- US-A- 2 389 842
- US-A- 2 409 019

## Description

### Domaine de l'invention

L'invention se rapporte au domaine de la soudure, et plus particulièrement, l'invention se rapporte à un dispositif comprenant une pluralité de calibre pour contrôler la qualité d'un cordon de soudure, notamment par rapport aux réglementations en vigueur dans le domaine précité.

### État de la technique

La présente invention concerne un dispositif de contrôle, et plus particulièrement un dispositif comprenant des calibres de contrôle des soudures. De tels calibres sont utilisés pour le contrôle visuel des cordons de soudure dans les assemblages soudés. Lesdits assemblages soudés sont soumis à des réglementations afin d'assurer la solidité et la qualité du travail de soudure. A titre d'exemple, la norme EN 1090-2 requière un contrôle visuel qui consiste dans un premier temps à vérifier si la soudure contrôlée a des défauts superficiels au niveau du cordon de soudure. Ce premier contrôle doit être réalisé selon les instructions de la norme EN ISO 17637. Dans un deuxième temps, ledit contrôle visuel consiste à vérifier si les défauts constatés sont acceptés ou non par les critères d'acceptation. Lesdits critères d'acceptation sont donnés par diverses normes de qualité, en fonction du type de soudure, de l'utilisation postérieure des éléments soudés, du niveau de qualité requis, etc. A titre d'exemple, les normes EN ISO 5817, EN 1090, EN 15085, voire des normes « client » doivent être consultés lors de cette seconde étape.

Les réglementations en vigueur exigent le contrôle visuel de la totalité des cordons de soudure présents dans toute la construction soudée. En pratique, le contrôle visuel est réalisé par le soudeur directement après l'exécution du cordon de soudure. Ledit contrôle visuel est donc réalisé en atelier de production où les conditions d'environnements ne sont pas optimum pour des prises de mesures exigeant parfois une précision de l'ordre du centième de millimètre.

Dans l'état actuel de la technique, afin de si un défaut superficiel sur un cordon de soudure est acceptable ou non selon une norme quelconque, un contrôle visuel est effectué. Dans un premier temps, le soudeur doit sélectionner un outil de mesure dimensionnelle mécanique pour permettre la prise de mesure(s) au niveau du cordon de soudure afin de vérifier la dimension du défaut. Dans un deuxième temps, le soudeur doit effectuer la mesure du défaut. Dans un troisième temps, le soudeur doit calculer les tolérances suivant des critères d'acceptation donnés dans l'une ou l'autre norme de qualité à appliquer. Enfin, et dans un quatrième temps, le soudeur doit contrôler si les résultats des mesures se trouvent ou non dans les tolérances calculées.

De nombreux dispositifs mécaniques de mesures dimensionnelles permettant la prise de mesures au niveau de cordon de soudure existent. A titre d'exemple, le document CA1240500 décrit un tel appareil permettant d'effectuer la deuxième étape du contrôle d'un défaut dans un cordon de soudure, telle que décrit ci-dessus. D'autres dispositifs permettant d'effectuer ces mesures sont des dispositifs à vernier de type pied à coulisse, voire des dispositifs fixes comparatifs de type calibre.

Or, les conditions d'environnement d'un atelier de production ainsi que le niveau de connaissances du soudeur rendent l'utilisation de ces dispositifs de mesures dimensionnels très difficile et très inconfortable, ce qui engendre une répétabilité et une précision faible des résultats de mesures. De plus, l'utilisation de ces dispositifs ne permet pas de se passer des étapes d'analyses et de comparaison qui suivent la prise de mesure. Les dispositifs de mesures dimensionnelles mécaniques de type calibre consistant en une prise de mesure par comparaison avec des dimensions prédéfinies, les résultats de mesure obtenus ne sont pas suffisamment précis. Le résultat du contrôle peut ainsi manquer de fiabilité.

Le document CN 202 869 418 décrit un outil pour mesurer la hauteur d'un cordon de souder sur une plaque d'acier.

Le document GB 439 319 décrit un instrument de vérification des dimensions relatives à des joints soudés.

Le document US 2 389 842 décrit des gabarits pour être utilisé en cas de vérification de différents types de soudures.

Le document DE 11 56 241 décrit un dispositif destiné à mesurer la hauteur d'une soudure d'angle.

Le document US 2 409 019 décrit un gabarit pour la soudure.

### Résumé de l'invention

La présente invention vise à pallier ces inconvénients, pour résoudre au moins partiellement les problèmes de l'état de la technique. Un des buts de l'invention est de rendre le contrôle des cordons de soudure par inspection visuelle plus simple, plus précis et plus ergonomique. Un autre but de l'invention est de faciliter le travail des soudeurs lors des étapes de contrôle des défauts d'un cordon de soudure en fournissant un outil simple permettant de s'affranchir des étapes compliquées ou chronophages du contrôle des défauts.

L'invention est définie par les revendications indépendantes. Les revendications dépendantes définissent des modes de réalisation préférés de l'invention.

Ainsi, selon le premier aspect de l'invention, il est fourni un dispositif pour contrôler au moins un défaut d'un cordon de soudure par rapport à une norme de qualité de soudure, ledit dispositif étant caractérisé en ce qu'il comprend une pluralité de calibres disposée sur un ou plusieurs éléments compris dans le dispositif,
la pluralité de calibres comprenant :
a) Au moins un premier calibre constitué d'une découpe de forme carrée,
b) Au moins un second calibre constitué d'une première découpe concave comprenant un téton s'étendant vers l'extérieur de ladite première découpe concave,
c) Au moins un troisième calibre constitué d'une découpe de forme rectangulaire,
d) Au moins un quatrième calibre constitué d'une arête droite et d'une seule et unique partie saillante disposée à une extrémité de l'arête, la partie saillante culminant à une hauteur comprise entre 0.2 mm et 5 mm par rapport à l'arête droite.

En effet, grâce à un tel dispositif, les calibres permettent de contrôler une pluralité de grandeurs géométriques lors du contrôle visuel. L'invention réduit aussi la procédure du contrôle visuel à une simple application sur le cordon de soudure et au niveau du défaut constaté d'au moins l'un des trois calibres et de constater si ledit défaut constaté sur le cordon de soudure respecte les exigences de la réglementation en vigueur pour le cordon de soudure.

Selon un mode de réalisation préféré de l'invention, le dispositif comprend une pluralité de premiers calibres, et/ou une pluralité de seconds calibres, et/ou une pluralité de troisièmes calibres, et/ou une pluralité de quatrièmes calibres. De façon encore plus préférentielle, les calibres de même forme ont au moins une grandeur différente, telle que par exemple une largeur, une longueur, etc.

Grâce à ce mode de réalisation préféré, un même défaut peut être contrôlé par rapport à une pluralité de normes en utilisant la pluralité de calibres de forme identique.

Avantageusement, les caractéristiques suivantes définissent l'invention :
- le quatrième calibre comprend en outre une seconde découpe concave disposée entre la partie saillante et l'arête droite ;
- un côté de la découpe de forme carrée a une longueur comprise entre 1 mm et 30 mm ;
- une distance entre une extrémité du téton s'étendant vers l'extérieur de ladite première découpe concave et un point se situant à une intersection entre deux arêtes disposées de part et d'autre de la première découpe concave est comprise entre 1 mm et 30 mm ;
- une longueur de la découpe de forme rectangulaire est comprise entre 2 mm et 50 mm ;
- une largeur de la découpe de forme rectangulaire est comprise entre 1 mm et 30 mm ;
- le dispositif comprend au moins deux premiers calibres, et les côtés des découpes de forme carrée sont de longueurs différentes ;
- le dispositif comprend au moins deux seconds calibres, et les distances entre les extrémités distales des tétons s'étendant vers l'extérieur des premières découpes concaves et des points se situant aux intersection entre deux arêtes disposées de part et d'autre des premières découpes concaves sont différentes ;
- le dispositif comprend au moins deux troisièmes calibres, et les longueurs des rectangles sont différentes ;
- le dispositif comprend au moins deux quatrièmes calibres, et les parties saillantes culminent à des hauteurs différentes par rapport leurs arêtes droites respectives.

Le second aspect de l'invention consiste à l'utilisation d'un dispositif selon le premier aspect pour contrôler au moins une dimension d'un cordon de soudure en fonction de valeurs dimensionnelles d'au moins une norme de qualité de soudure.

### Brève description des figures

Ces aspects ainsi que d'autres aspects de l'invention seront clarifiés dans la description détaillée de modes de réalisation particuliers de l'invention, référence étant faite aux dessins des figures, dans lesquelles :
- Fig.1: est une vue de face d'une pluralité de premiers calibres et de seconds calibres disposés sur un élément d'un dispositif selon un mode de réalisation de l'invention ;
- Fig.2: est une vue en perspective de l'élément du dispositif illustré à la Fig. 1 ;
- Fig.3: est une vue de face d'une pluralité de troisièmes calibres disposés sur un élément d'un dispositif selon un mode de réalisation de l'invention ;
- Fig.4: est une vue en perspective de l'élément du dispositif illustré à la Fig. 3 ;
- Fig.5: est une vue de face d'une pluralité de quatrièmes calibres disposés sur un élément d'un dispositif selon un mode de réalisation de l'invention ;
- Fig.6: est une vue en perspective de l'élément du dispositif illustré à la Fig. 5 ;
- Fig.7: est une illustration du contrôle d'un cordon de soudure par un premier calibre.
- Fig.8: est une illustration du contrôle d'un cordon de soudure par un troisième calibre.
- Fig.9: est une illustration du contrôle d'un cordon de soudure par un quatrième calibre.
- Fig.10: est une représentation du dispositif selon l'invention, les différents calibres étant disposés sur une pluralité d'éléments distincts.

Les dessins des figures ne sont ni à l'échelle, ni proportionnés. Généralement, des éléments semblables ou identiques sont dénotés par des références identiques dans les figures.

### Description détaillée de modes de réalisation de l'invention

L'invention est un dispositif (1) pour contrôler au moins une dimension d'un défaut au niveau d'un cordon de soudure par rapport à une norme de qualité de soudure. Par dimension, il faut comprendre par exemple une épaisseur, une hauteur, ou une profondeur de gorge par exemple. Une norme de qualité de soudure peut correspondre aux normes présentes dans les documents EN 1090, ISO EN 3834, EN 15085, ISO 9001.

Par défaut, il faut comprendre tout défaut relevé dans la norme EN ISO 6520-1. A titre d'exemple, un défaut peut être une cavité, une forme irrégulière, une dimension impropre, un cordon de soudure avec un dépôt, ou une faille dans une gorge de soudure. Toujours à titre d'exemple, un défaut peut être un dépôt trop important de matière au niveau d'une gorge de soudure.

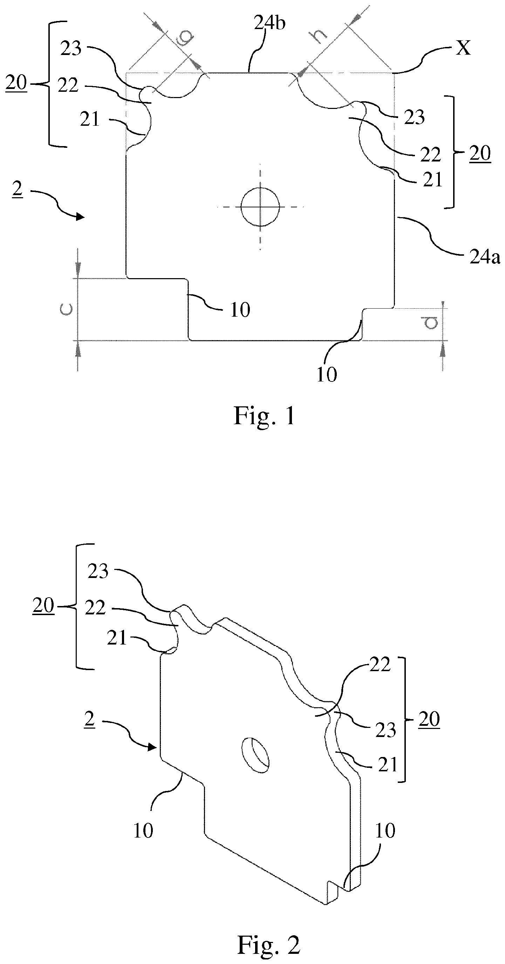

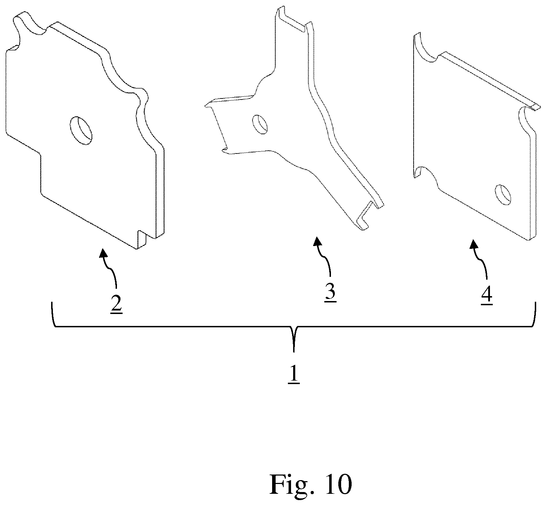

Le dispositif (1) comprend une pluralité de calibres (10, 20, 30, 40) de formes différentes. Le dispositif (1), grâce à la pluralité de calibres (10, 20, 30, 40), permet de déterminer la conformité d'un cordon de soudure avec au moins un critère présent dans une norme de soudure, et non de pratiquer une mesure sur un cordon de soudure afin d'en déterminer une valeur dimensionnelle.
Le dispositif peut comprendre les différents calibres (10, 20, 30, 40) sur une pluralité d'éléments distincts (2, 3 et 4), tel que représenté aux fig. 1, 3, et 5, et cette pluralité d'éléments distincts forment alors le dispositif (1) tel que représenté à la Fig. 10. Alternativement, les différents calibres (10, 20, 30, 40) peuvent être disposés sur un unique élément, non représenté sur les Fig.

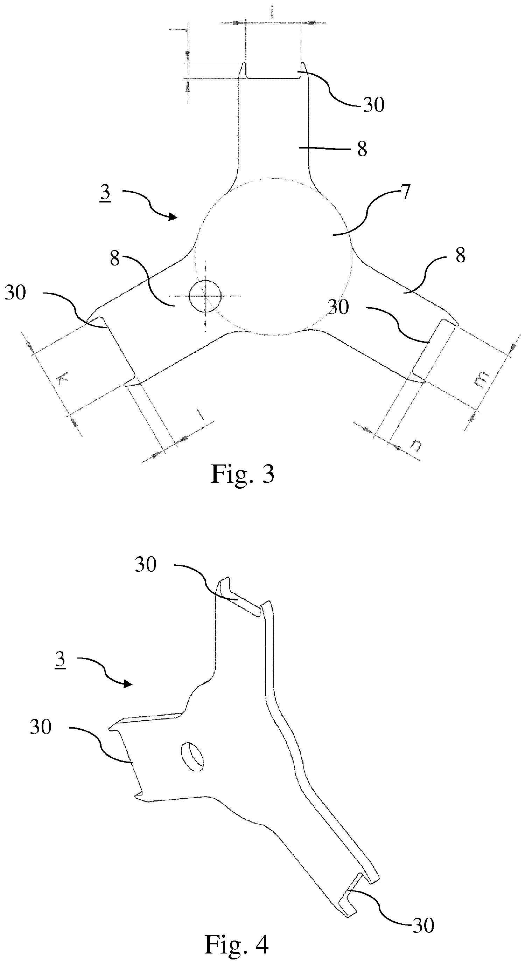

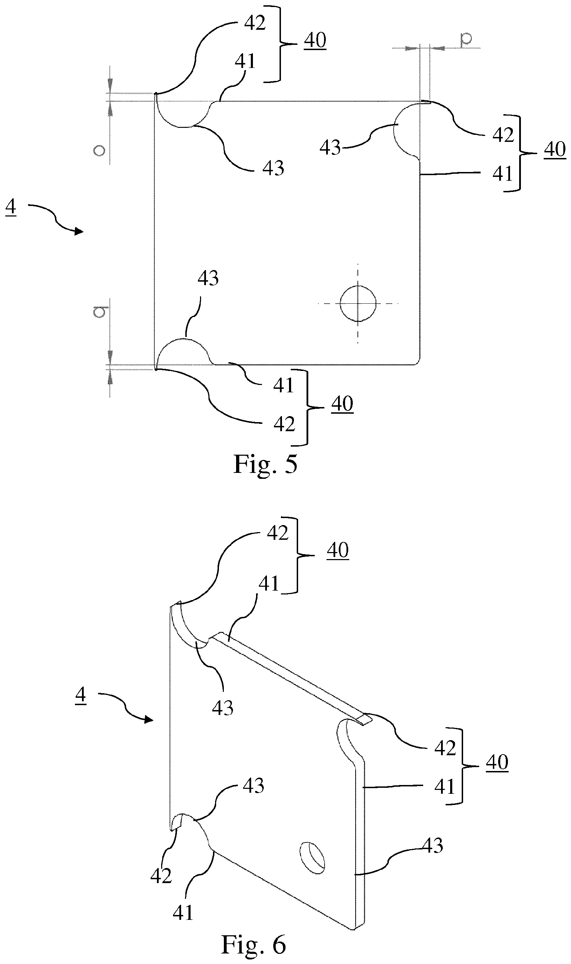

Le dispositif peut être en tout matériau rigide et non ductile. A titre d'exemple, le dispositif peut être fabriqué en acier ou en acier inoxydable.
Le dispositif comprend donc plusieurs calibres :
- Au moins un premier calibre (10) de forme carrée, illustré à la Fig.1 et à la Fig. 2;
- Au moins un second calibre (20) constitué d'une découpe concave (21) comprenant un téton (22) s'étendant vers l'extérieur de la découpe concave, illustré à la Fig. 1 et à la Fig. 2;
- Au moins un troisième calibre (30) de forme rectangulaire, illustré à la Fig. 3 et à la Fig. 4;
- Au moins un quatrième calibre (40) constitué d'une arête droite (41) et d'une seule et unique partie saillante (42) disposée à une extrémité de l'arête droite (41), illustré à la Fig. 5 et à la Fig. 6.

Le premier calibre (10) est une découpe de forme carrée. Sur la Fig.1 et sur la Fig. 2, deux premiers calibres sont illustrés. Un premier calibre (10) de forme carrée permet de contrôler dans le cas d'un cordon d'angle convexe des défauts présentant une hauteur de gorge trop grande et/ou une hauteur de gorge trop petite, ledit premier calibre (10) de forme carrée permet également de contrôler dans le cas d'un cordon d'angle concave ou convexe un défaut présentant une dissymétrie excessive.
De façon préférentielle, la longueur (c ou d) du côté des premiers calibres (10) est comprise entre 1 mm et 30 mm, de façon encore plus préférentielle entre 1 mm et 25 mm, de façon encore plus préférentielle entre 1 mm et 20 mm, et de façon la plus préférentielle entre 2 mm et 20 mm.

Selon un mode de réalisation préféré de l'invention, le dispositif (1) comprend plusieurs premiers calibres (10), par exemple au moins deux, voire au moins trois, ou encore au moins quatre. Les premiers calibres (10) présentent alors une longueur (c, d) différente, tel qu'illustré à la Fig.1 ou la longueur (c) du côté d'un premier calibre est supérieure à la longueur (d) d'un autre premier calibre. Ce mode de réalisation permet d'avoir un dispositif (1) apte à contrôler l'acceptation d'un défaut selon plusieurs normes.

Le second calibre (20) est une découpe constituée d'une première découpe concave (21) comprenant au centre de la découpe un téton (22) s'étendant vers l'extérieur. Sur la Fig. 1 et sur la Fig. 2, deux seconds calibres sont illustrés. Un second calibre (20) permet de contrôler dans le cas d'un cordon d'angle concave des défauts présentant une hauteur de gorge trop grande et/ou une hauteur de gorge trop petite.

De façon préférentielle, la distance (g ou h) entre une extrémité distale (23) d'un téton (22) et un point (X) se situant à une intersection issue du prolongement des arêtes entourant la première découpe concave (21) est comprise entre 1 mm et 30 m, de façon encore plus préférentielle entre 1 mm et 25 mm, de façon encore plus préférentielle entre 1 mm et 20 mm, et de façon la plus préférentielle entre 2 mm et 20 mm. De manière préférentielle, les arêtes entourant la première découpe concave (21) sont perpendiculaires.

Selon un mode de réalisation préféré de l'invention, le dispositif (1) comprend plusieurs seconds calibres (20), par exemple au moins deux, voire au moins trois, ou encore au moins quatre. Les seconds calibres (20) présentent alors une distance (g, h) différente, tel qu'illustré à la Fig.1 ou la distance (h) entre l'extrémité distale (23) du téton (22) et le point (X) situé au croisement du prolongement des arêtes entourant la première découpe concave est supérieure à la distance (g) d'un autre second calibre. Ce mode de réalisation permet d'avoir un dispositif (1) apte à contrôler avec un second calibre l'acceptation d'un défaut selon plusieurs normes.

Le troisième calibre (30) est une découpe de forme rectangulaire. Sur la Fig.3 et sur la Fig. 4, trois troisièmes calibres (30) sont illustrés. Un troisième calibre (30) de forme rectangulaire permet de contrôler des défauts présentant une surépaisseur excessive et/ou une convexité excessive.

De façon préférentielle, la longueur (i ou k ou m) du rectangle (30) est comprise entre 2 mm et 50 mm, de façon encore plus préférentielle entre 2 mm et 35 mm, de façon encore plus préférentielle entre 2 mm et 25 mm, et de façon la plus préférentielle entre 3 mm et 20 mm.

De façon préférentielle, la largeur (l ou j ou n) du rectangle (30) est comprise entre 1 mm et 30 mm, de façon encore plus préférentielle entre 1 mm et 25 mm, de façon encore plus préférentielle entre 1 mm et 20 mm, et de façon la plus préférentielle entre 2 mm et 15 mm.

Selon un mode de réalisation préféré de l'invention, le dispositif (1) comprend plusieurs troisièmes calibres (30), par exemple au moins deux, voire au moins trois, ou encore au moins quatre. Les troisièmes calibres (10) présentent alors une longueur (i, k, m) différente, tel qu'illustré à la Fig.3 ou la longueur (k) du rectangle est supérieure à la longueur (m ou i) d'un autre troisième calibre. Ce mode de réalisation permet d'avoir un dispositif (1) apte à contrôler l'acceptation d'un défaut selon plusieurs normes.

Selon un mode de réalisation préféré de l'invention, le dispositif (1) comprend plusieurs troisièmes calibres (30), par exemple au moins deux, voire au moins trois, ou encore au moins quatre. Les troisièmes calibres (10) présentent alors une largeur (l, j, n) différente, tel qu'illustré à la Fig.3 ou la largeur(n) du rectangle est supérieure à la largeur (j ou l) d'un autre troisième calibre. Ce mode de réalisation permet d'avoir un dispositif (1) apte à contrôler l'acceptation d'un défaut selon plusieurs normes.

Le quatrième calibre (40) est constitué d'une arête droite (41) et d'une seule et unique partie saillante (42) disposée à une extrémité de l'arête droite (41). Sur la Fig.5 et sur la Fig. 6, trois quatrièmes calibres sont illustrés. Un quatrième calibre (40) de permet de contrôler des défauts présentant une retassure ouverte de cratère excessive et/ou un caniveau excessif et/ou un caniveau à la racine excessif et/ou retassure à la racine excessive.

De façon préférentielle, et tel qu'illustré à la fig. 5, une second découpe concave (43) est aménagée entre l'arête droite (41) et la partie saillante (42) afin de faciliter la pose du calibre sur les cordons de soudure.

De façon préférentielle, la hauteur (o ou q ou p) de la partie saillante (42) du quatrième calibre (40) est comprise entre 0,2 mm et 5 mm, de façon encore plus préférentielle entre 0,2 mm et 4 mm, de façon encore plus préférentielle entre 0.3 mm et 4 mm, et de façon la plus préférentielle entre 0,3 mm et 3 mm. Selon un mode de réalisation préféré de l'invention, le dispositif (1) comprend plusieurs quatrièmes calibres (10), par exemple au moins deux, voire au moins trois, ou encore au moins quatre. Les quatrièmes calibres (10) présentent alors une hauteur de la partie saillante (o, q, p) différente, tel qu'illustré à la Fig.5 ou la hauteur (p) de la partie saillante d'un quatrième calibre est supérieure à la hauteur (o ou q) d'une autre seule et unique partie saillante d'un autre quatrième calibre. Ce mode de réalisation permet d'avoir un dispositif (1) apte à contrôler l'acceptation d'un défaut selon plusieurs normes.

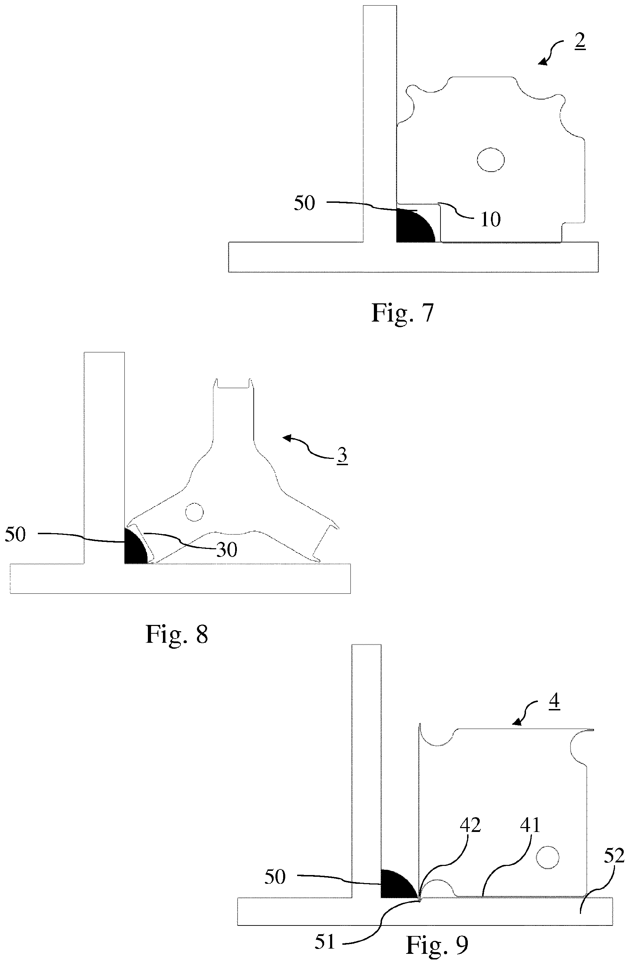

Différentes utilisations du dispositif (1) sont illustrées aux Fig. 7, 8 et 9.

A la fig. 7, un premier calibre (10) est utilisé pour contrôler un défaut sur un cordon de soudure (50) dont la surface est convexe. Les seconds calibres sont utilisés pour contrôler un défaut sur un cordon de soudure dont la surface est concave.

A la fig. 8, un troisième calibre (30) est utilisé pour contrôler un défaut sur un cordon de soudure (50) dont la surface est convexe, la découpe du rectangle permet de déterminer si la convexité est conforme à une norme particulière. Lorsque l'on applique le grand côté du rectangle découpé sur le sommet cordon de soudure si les extrémités des deux pointes sont en contact de manière simultanée avec les bords du cordon de soudure, le défaut est conforme à une norme de qualité. A l'inverse, Lorsque les deux pointes ne sont pas en contact de manière simultanée avec les bords du cordon de soudure, le défaut est manifestement hors des limites de la norme.

A la fig. 9, un quatrième calibre est utilisé pour contrôler un défaut sur un cordon de soudure (50), la partie saillante permettant de déterminer si la profondeur du caniveau (51) est conforme à une norme particulière. Lorsque l'arête droite (41) est en contact sur toute sa longueur avec le matériau soudé (52), le défaut est manifestement hors des limites de la norme. A l'inverse, si l'arête droite (41) n'est pas en contact sur toute sa longueur avec le matériau soudé (52), alors la hauteur du caniveau est conforme à une norme de qualité.

### Exemple de réalisation

Dans ce mode de réalisation, les différents calibres (10, 20, 30, 40) sont disposés sur une pluralité d'éléments faisant partie du dispositif (1) selon l'invention. Il s'entend que les différents calibres peuvent également être disposés sur un seul et unique élément.

Selon cet exemple de réalisation, le premier élément (2) est de forme carrée, la dimension de son côté varie de 25 à 35mm ce qui lui procure une manipulation très facile. Ledit premier élément (2) possède en deux de ses coins des premiers calibres (10), soit des découpes en forme de carré. Les largeurs desdits carrés (c, d) sont définies par le type de défaut à contrôler ainsi que par les exigences des normes appliquées. Ledit premier élément (2) possède en deux de ses coins des seconds calibres (20), soit des découpes concaves avec un téton. Les dimensions desdits seconds calibres sont définies par le type de défaut à contrôler ainsi que par les exigences des normes appliquées. Les premiers calibres et les seconds calibres permettent de vérifier selon les exigences de la norme appliquée la dissymétrie ainsi que la hauteur de la gorge d'un cordon de soudure concave ou convexe.

Le second élément (3) comprend une partie centrale en forme de rond (7), son diamètre varie de 20 à 25mm ce qui lui procure une manipulation très facile. Sur ce rond vient se placer en périphérie de manière égale trois extensions (8) de 10 à 15mm de long, chaque dite extension possède à son extrémité un troisième calibre (30), soit une découpe en forme de rectangle. Les largeurs et les longueurs desdits troisièmes calibres (respectivement j, k, l pour les largeurs et i, k et m pour les longueurs) sont définies par les exigences des normes appliquées. Lesdits troisièmes calibres permettent de vérifier selon les exigences de la norme appliquée la surépaisseur d'un cordon de soudure convexe.

Le troisième élément (4) est également de forme carrée, la dimension de son côté varie de 25 à 35mm ce qui lui procure une manipulation très facile. Ledit troisième élément (4) possède en trois de ces coins un quatrième calibre (30). Les dimensions des parties saillantes (42) (o, p et q) sont définies par le type de défaut à contrôler ainsi que les exigences des normes appliquées. Ledit quatrième calibre (40) permet de vérifier selon les exigences de la norme appliquée les morsures ainsi que les caniveaux des cordons de soudure.

La présente invention a été décrite en relation avec des modes de réalisations spécifiques, qui ont une valeur purement illustrative et ne doivent pas être considérés comme limitatifs. D'une manière générale, il apparaîtra évident pour l'homme du métier que la présente invention n'est pas limités aux exemples illustrés et/ou décrits ci-dessus. La présence de numéros de référence aux dessins ne peut être considérée comme limitative, y compris lorsque ces numéros sont indiqués dans les revendications.
L'usage des verbes « comprendre », « inclure », « comporter », ou toute autre variante, ainsi que leurs conjugaisons, ne peut en aucune façon exclure la présence d'éléments autres que ceux mentionnés.
L'usage de l'article indéfini « un », « une », ou de l'article défini « le », « la » ou « l' », pour introduire un élément n'exclut pas la présence d'une pluralité de ces éléments. L'invention est définie par les revendications. Un autre exemple de calibre de contrôle de cordons de soudure peut comprendre une pluralité de découpes : une découpe carré, une découpe rectangulaire, une découpe concave avec une excroissance ; et une arête droite terminée par une seule et unique partie saillante. Ce calibre permet de contrôler la conformité d'un cordon de soudure avec différentes normes de qualités, sans effectuer de mesures, ni de se reporter auxdites normes.

## Revendications

1. Dispositif (1) pour contrôler au moins un défaut d'un cordon de soudure par rapport à une norme de qualité de soudure, ledit dispositif (1) comprenant une pluralité de calibres disposée sur un ou plusieurs éléments compris dans le dispositif (1),
la pluralité de calibres comprenant :
a. Au moins un premier calibre (10) constitué d'une découpe de forme carrée,
b. Au moins un second calibre (20) constitué d'une première découpe concave (21) comprenant un téton (22) s'étendant vers l'extérieur de ladite première découpe concave (21),
c. Au moins un troisième calibre (30) constitué d'une découpe de forme rectangulaire,
ledit dispositif (1) étant **caractérisé en ce que** la pluralité de calibres comprend en outre
d. Au moins un quatrième calibre (40) constitué d'une arête droite (41) et d'une seule et unique partie saillante (42) disposée à une extrémité de l'arête, la partie saillante (42) culminant à une hauteur comprise entre 0.2 mm et 5 mm par rapport à l'arête droite (41).

2. Dispositif selon la revendication 1, **caractérisé en ce que** le quatrième calibre (40) comprend en outre une seconde découpe concave (43) disposée entre la partie saillante (42) et l'arête droite (41).

3. Dispositif selon la revendication 1 ou 2, **caractérisé en ce qu'**un côté de la découpe de forme carrée a une longueur (c, d) comprise entre 1 mm et 30 mm.

4. Dispositif selon l'une quelconque des revendications 1 à 3, **caractérisé en ce qu'**une distance entre une extrémité (23) du téton (22) s'étendant vers l'extérieur de ladite première découpe concave (21) et un point (X) se situant à une intersection entre deux arêtes (24a, 24b) disposées de part et d'autre de la première découpe concave (21) est comprise entre 1 mm et 30 mm.

5. Dispositif selon l'une quelconque des revendications 1 à 4, **caractérisé en ce qu'**une longueur de la découpe de forme rectangulaire est comprise entre 2 mm et 50 mm.

6. Dispositif selon l'une quelconque des revendications 1 à 5, **caractérisé en ce qu'**une largeur de la découpe de forme rectangulaire est comprise entre 1 mm et 30 mm.

7. Dispositif selon l'une quelconque des revendications précédentes, **caractérisé en ce qu'**il comprend au moins deux premiers calibres (10), et **en ce que** les côtés des découpes de forme carrée sont de longueurs différentes.

8. Dispositif selon l'une quelconque des revendications précédentes, **caractérisé en ce qu'**il comprend au moins deux seconds calibres (20), et **en ce que** les distances entre les extrémités distales (23) des tétons (22) s'étendant vers l'extérieur des premières découpes concaves (21) et des points (X) se situant aux intersections entre deux arêtes (24a, 24b) disposées de part et d'autre des premières découpes concaves (21) sont différentes.

9. Dispositif selon l'une quelconque des revendications précédentes, **caractérisé en ce qu'**il comprend au moins deux troisièmes calibres (30), et **en ce que** les longueurs des rectangles sont différentes.

10. Dispositif selon l'une quelconque des revendications précédentes, **caractérisé en ce qu'**il comprend au moins deux quatrièmes calibres (40), et **en ce que** les parties saillantes (42) culminent à des hauteurs différentes par rapport leurs arêtes droites (41) respectives.

11. Utilisation d'un dispositif (1) selon l'une quelconque des revendications 1 à 10 pour contrôler au moins une dimension d'un cordon de soudure en fonction de valeurs dimensionnelles d'au moins une norme de qualité de soudure.

## Patentansprüche

1. Vorrichtung (1) zum Kontrollieren wenigstens eines Fehlers einer Schweißnaht in Bezug auf eine Qualitätsnorm zum Schweißen, wobei die genannte Vorrichtung (1) eine Vielzahl von Schablonen umfasst, die auf einem oder mehreren Elementen angeordnet sind, die in der Vorrichtung (1) inbegriffen sind,
wobei die Vielzahl von Schablonen umfasst:
a. wenigstens eine erste Schablone (10), die aus einem quadratischen Ausschnitt gebildet ist,
b. wenigstens eine zweite Schablone (20), die aus einem ersten konkaven Ausschnitt (21) gebildet ist, umfassend einen Ansatz (22), der sich zur Außenseite des genannten ersten konkaven Ausschnitts (21) erstreckt,
c. wenigstens eine dritte Schablone (30), die aus einem rechteckigen Ausschnitt gebildet ist,
wobei die genannte Vorrichtung (1) **dadurch gekennzeichnet ist, dass** die Vielzahl von Schablonen darüber hinaus umfasst
d. wenigstens eine vierte Schablone (40), die aus einer geraden Kante (41) und einem einzigen und hervorstehenden Teil (42) gebildet ist, der an einem Ende der Kante angeordnet ist, wobei der hervorstehende Teil (42) in einer Höhe kulminiert, der zwischen 0,2 mm und 5 mm im Verhältnis zur geraden Katen (41) inbegriffen ist.

2. Vorrichtung gemäß Anspruch 1, **dadurch gekennzeichnet, dass** die vierte Schablone (40) darüber hinaus einen zweiten konkaven Ausschnitt (43) umfasst, der zwischen dem hervorstehenden Teil (42) und der geraden Kante (41) angeordnet ist.

3. Vorrichtung gemäß Anspruch 1 oder 2, **dadurch gekennzeichnet, dass** eine Seite des quadratischen Ausschnitts eine Länge (c, d) aufweist, die zwischen 1 mm und 30 mm inbegriffen ist.

4. Vorrichtung gemäß irgendeinem der Ansprüche 1 bis 3, **dadurch gekennzeichnet, dass** eine Entfernung zwischen einem Ende (23) des Ansatzes (22), der sich zur Außenseite des genannten ersten konkaven Ausschnitts (21) und einem Punkt (X) erstreckt, der an einem Schnittpunkt zwischen zwei Kanten (24a, 24b) angeordnet ist, die auf jeder Seite des ersten konkaven Ausschnitts (21) angeordnet sind, zwischen 1 mm und 30 mm inbegriffen ist.

5. Vorrichtung gemäß irgendeinem der Ansprüche 1 bis 4, **dadurch gekennzeichnet, dass** eine Länge des rechteckigen Ausschnitts zwischen 2 mm und 50 mm inbegriffen ist.

6. Vorrichtung gemäß irgendeinem der Ansprüche 1 bis 5, **dadurch gekennzeichnet, dass** eine Breite des rechteckigen Ausschnitts zwischen 1 mm und 30 mm inbegriffen ist.

7. Vorrichtung gemäß irgendeinem der voranstehenden Ansprüche, **dadurch gekennzeichnet, dass** sie wenigstens zwei erste Schablonen (10) umfasst und dass die Seiten der quadratischen Ausschnitte unterschiedliche Längen aufweisen.

8. Vorrichtung gemäß irgendeinem der voranstehenden Ansprüche, **dadurch gekennzeichnet, dass** sie wenigstens zwei zweite Schablonen (20) umfasst und dass die Entfernungen zwischen den distalen Enden (23) der Ansätze (22), die sich zur Außenseite der ersten konkaven Ausschnitte (21) und der Punkte (X) erstrecken, die an den Schnittpunkten zwischen zwei Kanten (24a, 24b) angeordnet sind, die auf jeder Seite der ersten konkaven Ausschnitte (21) angeordnet sind, unterschiedlich sind.

9. Vorrichtung gemäß irgendeinem der voranstehenden Ansprüche, **dadurch gekennzeichnet, dass** sie wenigstens zwei dritte Schablonen (30) umfasst und dass die Längen der Rechtecke unterschiedlich sind.

10. Vorrichtung gemäß irgendeinem der voranstehenden Ansprüche, **dadurch gekennzeichnet, dass** sie wenigstens zwei vierte Schablonen (40) umfasst und dass die hervorstehenden Teile (42) in unterschiedlichen Höhen in Bezug auf ihre jeweiligen geraden Kanten (41) kulminieren.

11. Verwendung einer Vorrichtung (1) gemäß irgendeinem der Ansprüche 1 bis 10 zum Kontrollieren wenigstens einer Abmessung einer Schweißnaht in Abhängigkeit von Abmessungswerten wenigstens einer Qualitätsnorm zum Schweißen.

## Claims

1. Device (1) for inspecting at least one defect of a weld bead with respect to a weld quality standard, the said device (1) comprising multiple gauges arranged on one or more components included in the device (1),
the multiple gauges including:
a. At least a first gauge (10) consisting of a square cut-out,
b. At least a second gauge (20) consisting of a first concave cut-out (21) comprising a stud (22) extending outwards from the said first concave cut-out (21),
c. At least a third gauge (30) consisting of a rectangular-shaped cut-out, the said device (1) being **characterized in that** the multiple gauges further comprise
d. At least a fourth gauge (40) consisting of a straight edge (41) and only a single protruding part (42) placed at one end of the edge, the protruding part (42) culminating at a height between 0.2 mm and 5 mm with respect to the straight edge (41).

2. Device according to claim 1, **characterised in that** the fourth gauge (40) further comprises a second concave cut-out (43) placed between the protruding part (42) and the straight edge (41).

3. Device according to claim 1 or 2, **characterised in that** one side of the square-shaped cut-out has a length (c, d) between 1 mm and 30 mm.

4. Device according to any one of claims 1 to 3, **characterised in that** a distance between one end (23) of the stud (22) extending towards the exterior of the said first concave cut-out (21) and a point (X) located at an intersection between two edges (24a, 24b) placed on either side of the first concave cut-out (21) is between 1 mm and 30 mm.

5. Device according to any one of claims 1 to 4, **characterised in that** a length of the rectangular-shaped cut-out is between 2 mm and 50 mm.

6. Device according to any one of claims 1 to 5, **characterised in that** the width of the rectangular-shaped cut-out is between 1 mm and 30 mm.

7. Device according to any one of the preceding claims, **characterised in that** it comprises at least two first gauges (10), and in which the sides of the square-shaped cut-outs are of different lengths.

8. Device according to any one of the preceding claims, **characterised in that** it comprises at least two second gauges (20), and **in that** the distances between the distal ends (23) of the studs (22) extending towards the exterior of the first concave cut-outs (21) and the points (X) located at the intersections between two edges (24a, 24b) placed on either side of the first concave cut-outs (21) are different.

9. Device according to any of the preceding claims, **characterised in that** it comprises at least two third gauges (30), and **in that** the lengths of the rectangles are different.

10. Device according to any of the preceding claims, **characterised in that** it comprises at least two fourth gauges (40), and **in that** the protruding parts (42) culminate at different heights with respect to their respective straight edges (41).

11. Use of a device (1) according to any one of claims 1 to 10 for inspecting at least one dimension of a weld bead based on dimensional values of at least one weld quality standard.
